# EUROPÄISCHE PATENTANMELDUNG

(11) **EP 2 724 927 A1**
(43) Veröffentlichungstag der Anmeldung: **30.04.2014**
(21) Anmeldenummer: 13185546.2
(22) Anmeldetag: 23.09.2013
(51) Int. Cl.: B62M 6/80

(54) **Anordnung zur induktiven Energieübertragung an ein elektrisch antreibbares Fahrzeug**

(30) Priorität: 26.10.2012 DE 102012219673
(71) Anmelder: ROBERT BOSCH GMBH, 70442 Stuttgart (DE)
(72) Erfinder: Lang, Thomas, 72768 Reutlingen (DE)

(57) **Zusammenfassung**

Es wird eine Anordnung zur induktiven Energieübertragung an ein elektrisch antreibbares Fahrzeug vorgeschlagen, welche eine Sekundärspule (3) und eine erste Signalverarbeitungseinheit (4) umfasst. Die erste Signalverarbeitungseinheit (4) ist eingerichtet, von der Sekundärspule (3)empfangene Energie zu verarbeiten und die Anordnung ist eingerichtet, die Sekundärspule (3) und einen Rohrrahmenabschnitt (6) des Fahrzeugs koaxial zueinander anzuordnen, wobei eine gut wärmeleitende Kopplung der Sekundärspule (3) und des Rohrrahmenabschnittes (6) erzielt wird.

## Beschreibung

### Stand der Technik

Die vorliegende Erfindung betrifft eine Anordnung zur induktiven Energieübertragung an ein elektrisch antreibbares Fahrzeug. Insbesondere betrifft vorliegende Erfindung eine gut integrierbare und verschmutzungsunanfällige Anordnung.

Im Stand der Technik bekannte Akku-betriebene elektrische Fahrzeuge offener Bauart (z.B. Elektrofahrräder, Elektroroller, Rasenmäher, usw.) benötigen zumeist Ladesysteme, welche ihre Energie über ein 230 V-Netz beziehen. Ein Bestandteil dieser Ladegeräte ist neben dem Netzteil ein DC/DC-Wandler, welcher die Netzspannung auf die Ladespannung (z.B. 40 V) überführt. Als DC/DC-Wandler werden häufig sogenannte Resonanzwandler verwendet, welche auch als Netzteile von Laptops bekannt sind. Bei einer Nennleistung von 100 bis 200 W haben diese Geräte Abmessungen von beispielsweise 160 x 50 x 40 mm, was einem Volumen von 0,32 l entspricht. Dabei wiegen die bekannten Geräte ungefähr 500 g. Für gewöhnlich werden diese Ladegeräte als separate Komponente geliefert, welche Kabelanschlüsse sowohl zum Energieversorgungsnetz als auch zum fahrzeugseitigen Akkumulator aufweisen. Ein wesentlicher Bestandteil solcher Geräte ist ein Übertrager (Transformator), welcher als induktiver Wandler das erforderliche Spannungsverhältnis zwischen Primär- und Sekundärseite herstellt. Die Anschaffung und das Mitführen separater Netzgeräte sind für den Anwender jedoch unbequem. Für einen Ladevorgang sind gleich mehrere elektrische Verbindungen herzustellen, welche leicht verschmutzen und Kontaktierungsfehler aufweisen können. Auch entwicklerseitig sind die bekannten Ladesysteme mit mehreren Nachteilen behaftet. Einerseits sind Steckverbindungen zu gegebenenfalls innerhalb der Karosserie bzw. des Fahrzeugs liegenden Akkumulatoren herzustellen, für welche Durchführungen vorgesehen werden müssen, welche Feuchtigkeit und Verschmutzungen Wege in den Fahrzeugrahmen öffnen. Andererseits ist eine Integration der bekannten Ladegeräte in bekannte Fahrzeugrahmen aufgrund des großen Wandlervolumens nicht ohne Weiteres möglich. Dabei wird das Volumen der bekannten Wandlereinheiten beispielsweise durch die Baugröße des Transformators, der Kühlbleche, der Kühlrippen sowie der Kondensatoren bestimmt. Des Weiteren ist eine Nach-/ Umrüstung solcher konventionellen Ladesysteme auf eine kontaktlose Energieübertragung zur Erhöhung der Anwenderakzeptanz nicht möglich. Überdies ist die Gewichtsverteilung eines herkömmlichen Ladegeräts herstellerseitig bzw. bauartbedingt vorgegeben, so dass wenig bzw. keine Einflussmöglichkeiten zur Schwerpunktsoptimierung eines mit dem Ladegerät ausgestatteten Fahrzeugs möglich ist. Schließlich ist auch eine Anpassung der Leistungsübertragungsparameter zwischen der Primär- und der Sekundärseite bei herkömmlichen Systemen meist nicht möglich, da alle Bauteile in einem verschlossenen Gehäuse angeordnet sind.

### Offenbarung der Erfindung

Die vorstehend genannten Nachteile des Standes der Technik werden erfindungsgemäß gelöst durch eine Anordnung mit den Merkmalen gemäß Anspruch 1 sowie ein elektrisch antreibbares Fahrzeug mit den Merkmalen gemäß Anspruch 10. Entsprechend weist eine erfindungsgemäße Anordnung zur induktiven Energieübertragung an ein elektrisch antreibbares Fahrzeug eine Sekundärspule und eine erste Signalverarbeitungseinheit auf. Die Sekundärspule ist dabei vorgesehen, induktiv Energie zu empfangen und über elektrische Leitungen an die erste Signalverarbeitungseinheit weiterzugeben. In der Signalverarbeitungseinheit können die empfangenen Wechselsignale verarbeitet, also z.B. gleichgerichtet und einem Energiespeicher (z.B. einem elektrochemischen Energiespeicher) zugeführt werden. Hierzu weist die erste Signalverarbeitungseinheit einen Gleichrichter auf. Weiter ist die Anordnung erfindungsgemäß eingerichtet, die Sekundärspule und einen Rohrrahmenabschnitt des Fahrzeugs koaxial zueinander anzuordnen und beide dabei gut wärmeleitend miteinander zu koppeln. Dies kann beispielsweise durch eine im Wesentlichen direkte Anbringung der (selbstverständlich elektrisch gegen den Rahmen isolierten) Spule an dem Rohrrahmenabschnitt geschehen. Alternativ oder zusätzlich können Wärmevermittler, wie beispielsweise Wärmeleitpasten zwischen dem Rohrrahmenabschnitt und der Sekundärspule vorgesehen sein.

Die Unteransprüche zeigen bevorzugte Weiterbildungen der Erfindung.

Weiter bevorzugt kann die Sekundärspule eingerichtet sein, innerhalb des Rohrrahmenabschnittes angeordnet zu werden. Auf diese Weise ist die Sekundärspule bei entsprechender Abdichtung des Rohrrahmenabschnittes gegenüber Witterungseinflüssen und mechanischen Beschädigungen geschützt und kann einen (insbesondere innerhalb des Rohrrahmenabschnittes angeordneten) Akkumulator ohne eine weitere Durchdringung der Außenhülle des Rohrrahmenabschnittes kontaktieren. Zur Positionierung der Sekundärspule in erfindungsgemäßer Weise innerhalb des Rohrrahmenabschnittes kann die Anordnung eine Führungseinheit umfassen, welches die Positionierung der Sekundärspule in wärmeleitender Kopplung mit dem Rohrrahmenabschnitt gewährleistet und bevorzugt auch die erste Signalverarbeitungseinheit aufnimmt. Auf diese Weise ist eine kompakte Fertigungseinheit zur Verfügung gestellt, welche hersteller- oder anwenderseitig in den Rohrrahmenabschnitt des Fahrzeugs eingebracht werden kann.

Bevorzugt kann die Führungseinheit auch eine Aufnahme für einen elektrochemischen Energiespeicher ("Akku") aufweisen, mittels welcher auch der Energiespeicher gut wärmeleitend mit dem Rohrrahmenabschnitt des Fahrzeugs gekoppelt wird. Dies bietet einerseits die Möglichkeit, während eines Ladevorgangs entstehende Verlustwärme innerhalb des Akkus über den Rohrrahmenabschnitt abzuführen, andererseits (insbesondere bei niedrigen Außentemperaturen) kann aufgrund der thermischen Nähe des Energiespeichers und der Sekundärspule durch die Sekundärspule und/oder die Signalverarbeitungseinheit erzeugte Wärme verwendet werden, um den Akkumulator auf Betriebstemperatur zu bringen.

Bevorzugt weist die Anordnung eine Primärspule auf und ist eingerichtet, auch die Primärspule und den Rohrrahmenabschnitt des Fahrzeugs koaxial zueinander anzuordnen und dabei gut wärmeleitend miteinander zu koppeln. Mit anderen Worten durchdringt der Rohrrahmenabschnitt des Fahrzeugs eine durch die Windungen der Primärspule bzw. der Sekundärspule aufgespannte Ebene im Wesentlichen in rechtem Winkel. Für die Wärmekopplung der Primärspule mit dem Rohrrahmenabschnitt gelten die in Verbindung mit der Sekundärspule gemachten Ausführungen entsprechend. Zur magnetischen Kopplung der Primärspule und der Sekundärspule können beide Spulen in räumlicher Nähe zueinander an dem Rohrrahmenabschnitt angeordnet werden. Insbesondere eine innerhalb des Rohrrahmenabschnittes angeordneten Sekundärspule kann dabei einen Ferritkern umfassen, welcher die Magnetfeldlinien der Spulen bevorzugt führt und im Inneren der Spulen konzentriert. Auf diese Weise ergibt sich eine gute Kopplung beider Spulen, was den Wirkungsgrad der Energieübertragung erhöht.

Bevorzugt ist die Primärspule eingerichtet, außerhalb des Rohrrahmenabschnittes angeordnet zu werden. Auf diese Weise ergibt sich eine einfache Möglichkeit, eine Verbindung des elektrisch antreibbaren Fahrzeugs während eines Ladevorgangs dadurch herzustellen, dass die Primärspule am Rohrrahmenabschnitt angeordnet und über eine elektrische Leitung mit einer elektrischen Energieversorgung eines Energienetzbetreibers verbunden wird. Zudem ist eine Wärmeabfuhr für die Primärspule auf diese Weise auch durch die Umgebungsluft und etwaige Niederschläge gegeben. Auch die Sekundärspule kann prinzipiell außerhalb des Rohrrahmenabschnittes angeordnet werden, wodurch sich die vorgenannten Vorteile hinsichtlich der Wärmeabfuhr und einer schnellen und reversiblen Montage auch für die Sekundärspule ergeben. Allerdings bietet eine Anordnung der Sekundärspule innerhalb des Rohrrahmenabschnittes Vorteile beim Schutz der Sekundärspule vor Beschädigungen aufgrund von Flüssigkeiten und mechanischen Einflüssen.

Weiter bevorzugt kann die Anordnung eingerichtet sein, die gegenseitige mechanische Kopplung beider Spulen insbesondere durch Variation ihres Abstandes voneinander entlang des Rohrrahmenabschnittes zu justieren. Beispielsweise können die Spulen über ein Gewinde oder eine verschiebliche Lagerung voneinander entfernt bzw. zueinander bewegt werden, wodurch sich die magnetische Kopplung beider Spulen insbesondere für den Fall ändert, dass ein innerhalb einer Spule angeordneter Ferritkern in einer ersten Position beide Spulen durchdringt, während er in einer zweiten Position lediglich eine Spule durchdringt. Dadurch kann beispielsweise die Energieübertragung fahrzeugabhängig optimiert werden. Auch eine intuitive und flexible Beeinflussung des Gesamtschwerpunkts des Fahrzeugs kann durch eine solche flexible Anordnung ermöglicht werden.

Weiter bevorzugt kann die Anordnung einen Hall-Sensor umfassen, welcher eingerichtet ist, am Rohrrahmenabschnitt des Fahrzeugs ein magnetisches Feld zu messen. Hierzu kann der Hall-Sensor beispielsweise an einer inneren Oberfläche des Rohrrahmenabschnittes in räumlicher Nähe einer Spule oder beider Spulen angeordnet sein. Mittels des Hall-Sensors kann das magnetische Feld und somit Kenngrößen der Energieübertragung während des Ladevorgangs überwacht werden. Alternativ können mehrere Hall-Sensoren vorgesehen werden, so dass jeder Hall-Sensor im Wesentlichen das Magnetfeld einer einzelnen Spule erfasst. Es versteht sich überdies von selbst, dass auch ein anderer Sensor benutzt werden kann, welcher ein Magnetfeld nach Ausrichtung und Stärke messen kann.

In einer möglichen Ausgestaltung ist das elektrisch antreibbare Fahrzeug ein Zweirad, insbesondere ein Fahrrad oder ein Elektroroller. Solche Fahrzeuge erfreuen sich aufgrund steigender Kosten für fossile Kraftstoffe steigender Beliebtheit und stellen überdies eine mögliche Maßnahme gegen geringes Parkplatzangebot in Ballungszentren dar.

Der Rohrrahmenabschnitt kann bevorzugt rundrohrförmig ausgestaltet sein, wodurch zylindrisch gewickelte Spulen eine ideale und direkte Wärmekopplung mit dem Rohrrahmenabschnitt eingehen können.

Um die Primärspule für einen Ladevorgang reversibel mit der Sekundärspule zu verbinden, kann eine Steckverbindung zwischen dem Rohrrahmenabschnitt und der Primärspule vorgesehen sein, welche zusätzlich oder alternativ als Schnapp-/ Rastverbindung ausgestaltet sein kann. Auf diese Weise wird eine intuitive und unkomplizierte Lösung zur bequemen Verbindung beider Spulen zur Verfügung gestellt.

Weiter bevorzugt ist eine zweite Signalverarbeitungseinheit ist mit der Primärspule verbunden. Dabei weist die zweite Signalverarbeitungseinheit bevorzugt einen Frequenzwandler und/oder einen Gleichrichter auf. Auf diese Weise kann die zweite Signalverarbeitungseinheit eine Netzspannung (Wechselspannung) gleichrichten und anschließend mittels des Frequenzwandlers auf eine für die induktive Energieübertragung geeignete Frequenz (beispielsweise im kHz-Bereich zwischen 10 und 1000 kHz) wandeln. Auf diese Weise erhöht sich der erreichbare Wirkungsgrad bei der induktiven Übertragung gegenüber der von herkömmlichen Netzspannungsquellen zur Verfügung gestellten 50 Hz-Signale. Dabei können die Signalverarbeitungseinheiten Leistungshalbleiter umfassen, welche insbesondere eingerichtet sind, gut wärmeleitend mit dem Rohrrahmenabschnitt verbunden zu werden. Auf diese Weise wird eine effektive Entwärmung der Leistungshalbleiter während des Ladevorgangs erreicht, was die erzielbaren Ladegeschwindigkeiten erhöht und Materialschäden vermeidet.

Gemäß einem weiteren Aspekt der vorliegenden Erfindung wird ein elektrisch antreibbares Fahrzeug, insbesondere ein Zweirad (z.B. Fahrrad, Roller) zur Verfügung gestellt, welches einen, insbesondere in einem Rohrrahmenabschnitt des Fahrzeugs angeordneten Energiespeicher sowie eine Anordnung zur induktiven Energieübertragung umfasst, wie sie oben ausführlich beschrieben worden ist.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines erfindungsgemäß eingerichteten elektrisch antreibbaren Fahrzeugs;
- Figuren 2 bis 6: schematische Ansichten unterschiedlicher Ausführungsbeispiele für erfindungsgemäße Anordnungen;
- Figur 7: eine Schnittdarstellung durch ein weiteres Ausführungsbeispiel einer erfindungsgemäßen Anordnung; und
- Figur 8: eine schematische Ansicht eines Ausführungsbeispiels einer erfindungsgemäßen Anordnung in einer zusammengesteckten Rohrrahmenabschnittsanordnung.

### Ausführungsformen der Erfindung

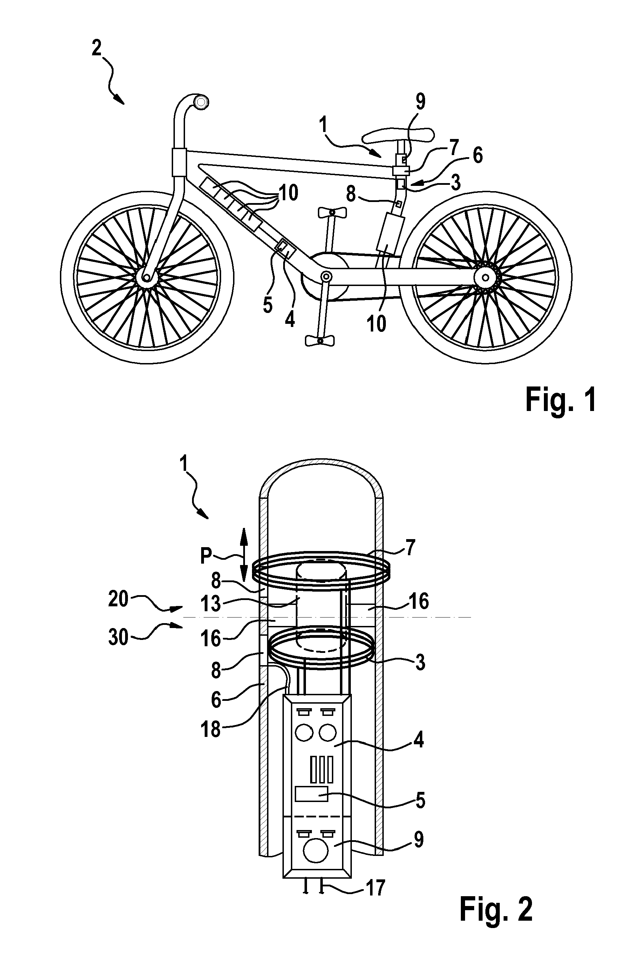

Figur 1 zeigt ein elektrisch antreibbares Fahrzeug in Form eines Fahrrades 2. Im Bereich der Sattelstütze des Fahrrades 2 ist eine erfindungsgemäße Anordnung 1 vorgesehen. Unterhalb des Sattels ist eine zweite Signalverarbeitungseinheit 9 in räumlicher Nähe zu einer Primärspule 7 angeordnet, wobei letztere die Sattelstütze umfasst. Mit anderen Worten ist die Primärspule 7 außerhalb eines Rohrrahmenabschnittes des Fahrrades 2 angeordnet. Unterhalb der Primärspule 7 ist innerhalb eines Rohrrahmenabschnitts 6 des Fahrrades 2 eine Sekundärspule 3 angeordnet, welche mit einem elektrochemischen Energiespeicher 10 verbunden ist. Weiter ist am Rohrrahmenabschnitt 6 ein Hall-Sensor 8 angeordnet, welcher eingerichtet ist, ein Magnetfeld zur Bestimmung des Betriebszustandes der erfindungsgemäßen Anordnung 1 zu messen. Im Bereich des Tretlagers des Fahrrades 2 ist eine erste Signalverarbeitungseinheit 4 mit einem Gleichrichter 5 zur sekundärseitigen Gleichrichtung des von der Sekundärspule 3 empfangenen Signals vorgesehen. Die Interaktion und räumliche Anordnung der vorgenannten Merkmale wird anhand der nachfolgenden Figuren eingehender diskutiert.

Figur 2 zeigt einen Rohrrahmenabschnitt 6 des in Figur 1 vorgestellten Fahrrades 2. Auf den Rohrrahmenteil 6 ist, wie durch den Pfeil P angedeutet, eine Primärspule 7 aufgesteckt. Ein Ferritstab 13 ist durch eine Halterung 16 koaxial zum Rohrrahmenabschnitt 6 innerhalb desselben angeordnet. Auf einer der Primärspule 7 bezüglich des Ferritstabes 13 gegenüberliegenden Seite ist innerhalb des Rohrrahmenabschnittes 6 eine Sekundärspule 3 angeordnet, welche mit einer ersten Signalverarbeitungseinheit 4, umfassend einen Gleichrichter 5, verbunden ist. Leitungen 17 verbinden die erste Signalverarbeitungseinheit 4 mit einem elektrochemischen Energiespeicher (in Figur 2 nicht dargestellt) innerhalb des Rahmens des Fahrrades 2. Auf Höhe der Primärspule 7 ist am Rohrrahmenabschnitt 6 ein Hall-Sensor 8 angeordnet, welcher eingerichtet ist, ein durch die Primärspule 7 induziertes Magnetfeld zu messen. Entsprechend ist ein weiterer Hall-Sensor 8 in einem Kontaktbereich zwischen dem Rohrrahmenabschnitt 6 und der Sekundärspule 3 angeordnet. Dieser Hall-Sensor 8 ist über eine Sensorleitung 18 mit der ersten Signalverarbeitungseinheit 4 verbunden, welche die Auswertung der Sensorsignale durchführt. Die dargestellt Anordnung lässt sich entlang einer durch den Ferritstab 13 verlaufenden Grenze als eine die Primärspule 7 umfassende Sendeeinheit 20 und eine die Sekundärspule 3 umfassende Empfangseinheit 30 gliedern.

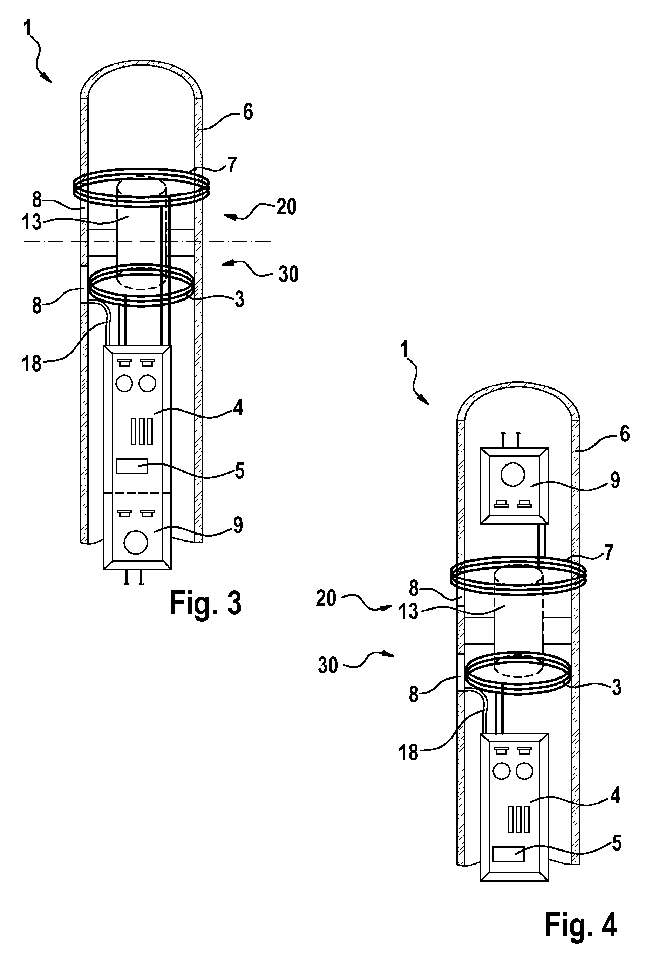

Figur 3 zeigt das in Figur 2 dargestellte Ausführungsbeispiel in einer Abwandlung, gemäß welcher die Primärspule 7 nicht entlang der Rohrrahmenabschnittsachse verschieblich angeordnet ist. Ansonsten entsprechen die Merkmale des in Figur 3 dargestellten Ausführungsbeispiels den in Figur 2 dargestellten identisch.

Figur 4 zeigt ein Ausführungsbeispiel einer erfindungsgemäßen Anordnung, gemäß welchem die erste Signalverarbeitungseinheit 4 und die zweite Signalverarbeitungseinheit 9 in unterschiedlichen Gehäusen innerhalb des Rohrrahmenabschnittes 6 angeordnet sind. Dabei ist die erste Signalverarbeitungseinheit 4 räumlich der Empfangseinheit 30 und die zweite Signalverarbeitungseinheit 9 räumlich der Sendeeinheit 20 zugeordnet. Die erste Signalverarbeitungseinheit 4 ist mittels eines Gleichrichters 5 eingerichtet, die von der Sekundärspule 3 empfangenen Signale gleichzurichten, um sie zum Speichern in einem (nicht dargestellten) elektrochemischen Energiespeicher des Fahrrades 2 aufzubereiten. Die zweite Signalverarbeitungseinheit 9 ist eingerichtet, Netzspannungssignale (gegebenenfalls unter Vermittlung eines Gleichrichters) zu wandeln, um sie für die induktive Energieübertragung aufzubereiten. Hierzu umfasst die zweite Signalverarbeitungseinheit 9 einen Frequenzgenerator, welcher eingerichtet ist, die gleichgerichteten Netzsignale auf Frequenzen zwischen 10 und 1000 kHz umzurichten. Insbesondere haben sich Frequenzen im Bereich zwischen 30 kHz und 100 kHz, bevorzugt im Bereich um 50 kHz, als vorteilhaft herausgestellt. Die übrigen Merkmale entsprechen den in Verbindung mit den Figuren 2 und 3 erläuterten, weshalb auf diese zur Vermeidung von Wiederholungen nicht weiter eingegangen wird.

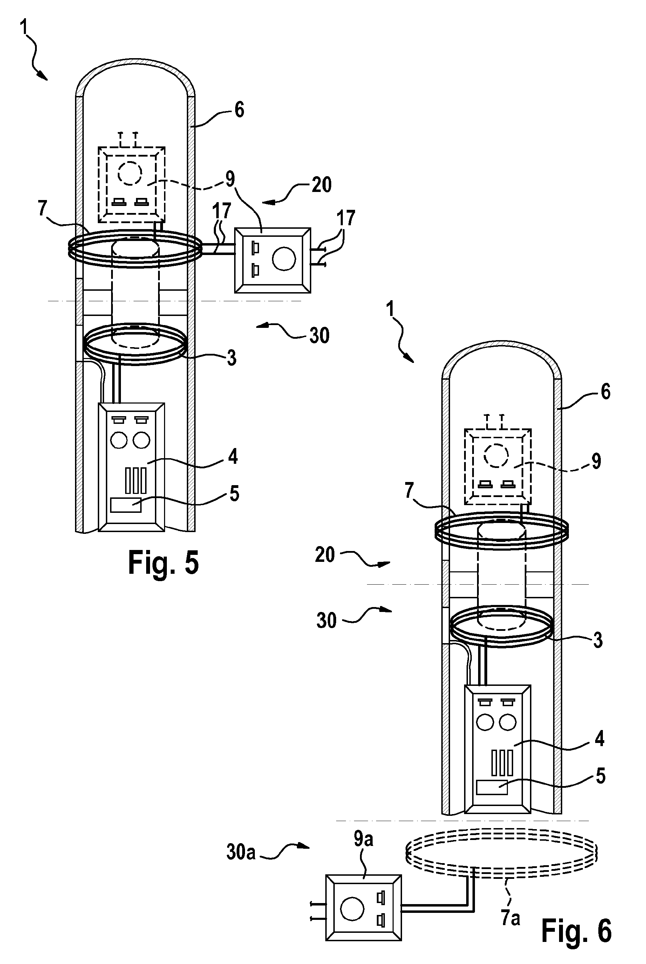

Figur 5 zeigt das in Figur 4 dargestellte Ausführungsbeispiel, welches durch externe Anordnung der vormals innerhalb des Rohrrahmenteils 6 angeordneten zweiten Signalverarbeitungseinheit 9 modifiziert worden ist. Da auch die Primärspule 7 außerhalb des Rohrrahmenabschnittes 6 angeordnet ist, erübrigt sich eine Durchführung durch den Mantel des Rohrrahmenabschnittes 6. Die zweite Signalverarbeitungseinheit 9 kann beispielsweise in einem auch die Primärspule 7 umfassenden Gehäuse (nicht dargestellt) angeordnet sein, wodurch sich eine besonders kompakte Anordnung realisieren lässt. Die übrigen Merkmale entsprechen den in Verbindung mit Figur 4 diskutierten.

Figur 6 zeigt die in Figur 4 dargestellte und in Verbindung mit dieser diskutierte Anordnung, wobei die in den Rohrrahmenabschnitt 6 integrierte Sendeeinheit 20 nicht verwendet wird (gestrichelt dargestellt). Im Gegensatz hierzu wird eine alternative (beispielsweise nachgerüstete) zweite Signalverarbeitungseinheit 9a in Verbindung mit einer alternativen Primärspule 7a verwendet, um ohne Berührung mit dem Rohrrahmenabschnitt 6 induktiv Energie an die Sekundärspule 3 zu senden. Die in Figur 6 dargestellte Anordnung stellt ein Anwendungsszenario dar, bei welchem ein erfindungsgemäß ausgestattetes Fahrrad 2 aufgrund eines alternativ vorhandenen Sendesystems 30a in alternativer Art und Weise mit Energie versorgt wird. Beispielsweise kann ein Defekt der zweiten Signalverarbeitungseinheit 9 oder der Zuleitung einen Anwender veranlassen, den dargestellten Weg zum Energieeintrag zu wählen.

Das alternativ vorhandene Sendesystem 30a kann auch Teil einer öffentlich zugänglichen Ladestation sein, welche der Anwender zusätzlich oder alternativ zu seiner eigenen Sendeeinheit 20 nutzt.

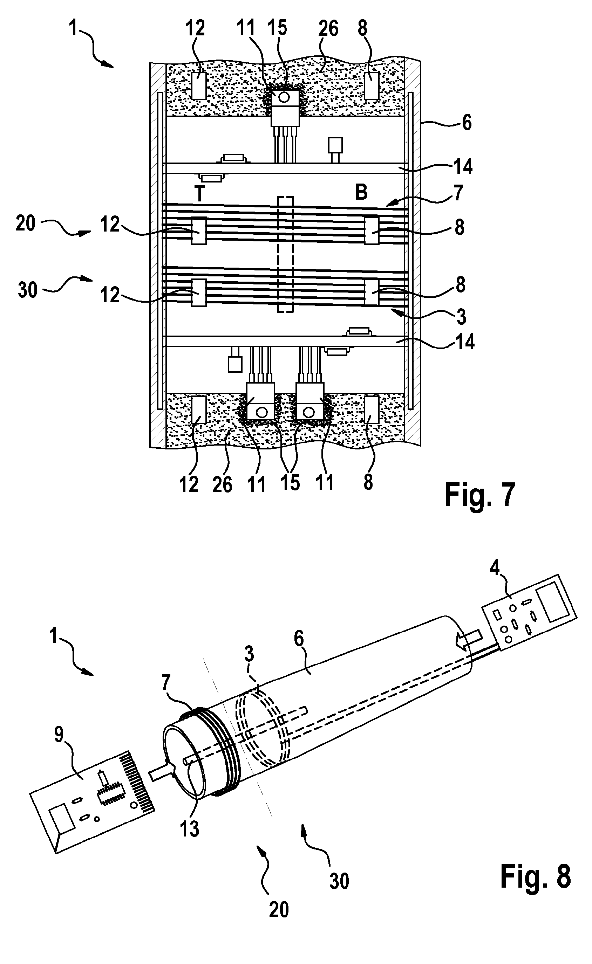

Figur 7 zeigt ein Rohrrahmenteil 6, welches einen aus Metallschaum 26 gefertigten Kühlkörper in Rohrform aufweist, wobei in den Metallschaum 26 eingebettete Temperatursensoren 12, Hall-Sensoren 8 und über Kühlpaste 15 und/oder elektrische Isolierscheiben in den Metallschaum 26 eingebettete Leistungshalbleiter 11 integriert sind. Die Leistungshalbleiter 11 sind mit im Hohlraum des Kühlkörpers vorgesehenen Leiterplatten 14 elektrisch verbunden. Dabei können die Leiterplatten 14 der Sendeeinheit 20 mit der Primärspule 7 und weiteren, im Bereich der Primärspule 7 angeordneten Temperatursensoren 12 und Hall-Sensoren 8 verbunden sein, während die in der Empfangseinheit 30 vorgesehene Leiterplatte 14 mit einer Sekundärspule 3 und im Bereich der Sekundärspule 3 vorgesehenen Temperatursensoren 12 und Hall-Sensoren 8 verbunden ist. Insbesondere können die Signale oder Sensoren 12 und 8 in einem besonderen Regelungsverfahren dazu benutzt werden, die Energieübertragung zwischen Sendeeinheit 20 und Empfangseinheit 30 zu regeln.

Figur 8 zeigt ein alternatives Ausführungsbeispiel für eine erfindungsgemäße Anordnung 1, wobei der Rohrrahmenabschnitt 6 durch eine Sattelstütze des Fahrrades 2 verkörpert wird. Die Sendeeinheit 20 umfasst eine als Leiterplatte ausgestaltete zweite Signalverarbeitungseinheit, welche mit einer außerhalb der Sattelstütze angeordneten Primärspule 7 verbunden ist. Innerhalb der Sattelstütze ist eine Sekundärspule 3 angeordnet, wobei sowohl die Primärspule 7 als auch die Sekundärspule 3 durch einen gemeinsamen Ferritstab 13 durchdrungen werden. Die Sekundärspule 3 ist elektrisch mit einer Leiterplatte einer ersten Signalverarbeitungseinheit 4 verbunden.

Es ist ein Kerngedanke der vorliegenden Erfindung, eine Anordnung zur induktiven Energieübertragung an ein elektrisch antreibbares Fahrzeug vorzuschlagen, welche einerseits möglichst robust ausgestaltet ist, indem die Anordnung zumindest anteilig innerhalb mechanisch fester Volumina des Fahrzeugs angeordnet werden kann, andererseits eine verschiebliche relative Position einer Primärspule und einer Sekundärspule eine Anpassung eines Übertragungsverhältnisses (anpassbare magnetische Kopplung) möglich ist. Überdies wird ein gut wärmeleitender Kontakt zur induktiven Energieübertragung verwendeter Spulen mit einem Rohrrahmenabschnitt des Fahrzeugs vorgeschlagen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Anordnung (1) zur induktiven Energieübertragung an ein elektrisch antreibbares Fahrzeug (2) umfassend
• eine Primärspule (7), und
• eine Sekundärspule (3), und
• eine erste Signalverarbeitungseinheit (4),
wobei die erste Signalverarbeitungseinheit (4) eingerichtet ist, die von der Sekundärspule (3) empfangene Energie zu verarbeiten , und
die Anordnung (1) eingerichtet ist, die Sekundärspule (3) und einen Rohrrahmenabschnitt (6) des Fahrzeugs (2) koaxial zueinander anzuordnen und dabei gut wärmeleitend miteinander zu koppeln,
wobei die gegenseitige magnetische Kopplung zwischen der Primärspule (7) und der Sekundärspule (3) durch Variation ihres Abstandes voneinander entlang des Rohrrahmenabschnittes (6) justierbar gestaltet ist.

2. Anordnung nach Anspruch 1, wobei die Sekundärspule (3) eingerichtet ist, innerhalb des Rohrrahmenabschnittes (6) angeordnet zu werden.

3. Anordnung nach Anspruch 1 oder 2, wobei die Anordnung (1) eingerichtet ist, die Primärspule (7) und den Rohrrahmenabschnitt (6) des Fahrzeugs (2) koaxial zueinander anzuordnen und dabei gut wärmeleitend miteinander zu koppeln.

4. Anordnung nach Anspruch 3, wobei die Primärspule (7) eingerichtet ist, außerhalb des Rohrrahmenabschnittes (6) angeordnet zu werden und die Sekundärspule (3) eingerichtet ist, außerhalb oder innerhalb des Rohrrahmenabschnittes (6) angeordnet zu werden.

5. Anordnung nach einem der vorstehenden Ansprüche, wobei die Anordnung (1) einen Hallsensor (8) oder einen anderen Magnetfeldsensor umfasst, welcher eingerichtet ist, am Rohrrahmenabschnitt (6) des Fahrzeugs (2) ein magnetisches Feld zu messen.

6. Anordnung nach einem der vorhergehenden Ansprüche, **dadurch gekennzeichnet, dass** zur Wärmekopplung ein Kühlkörper aus Metallschaum (26) vorgesehen ist, wobei insbesondere vorgesehen ist, dass in den metallschaum (26) Temperatursensoren (12), Hall-Sensoren (8) und/oder über eine Kühlpaste (15) in den Metallschaum Leistungshalbleiter (11) eingebettet sind.

7. Anordnung nach einem der vorstehenden Ansprüche, wobei das Fahrzeug (2) ein Zweirad ist und/oder der Rohrrahmenabschnitt (6) rundrohrförmig ist.

8. Anordnung nach einem der Ansprüche 3 bis 7, wobei die Primärspule (7) eingerichtet ist, für einen Ladevorgang reversibel, insbesondere mittels einer Steckverbindung und/oder Schnapp-/Rastverbindung, mit der Sekundärspule (3) verbunden zu werden.

9. Anordnung nach einem der vorstehenden Ansprüche 3 bis 8, wobei eine zweite Signalverarbeitungseinheit (9), umfassend einen Frequenzwandler und bevorzugt einen Gleichrichter (5), mit der Primärspule (7) verbunden ist, wobei die Signalverarbeitungseinheiten (4, 9) Leistungshalbleiter (11) umfassen, welche insbesondere eingerichtet sind, gut wärmeleitend mit dem Rohrrahmenabschnitt (6) verbunden zu werden.

10. Elektrisch antreibbares Fahrzeug (2) umfassend
- einen, insbesondere in einem Rohrrahmenabschnitt (6) des Fahrzeugs (2) angeordneten, Energiespeicher (10), sowie
- eine Anordnung (1) nach einem der vorstehenden Ansprüche.

11. Verfahren zur induktiven Energieübertragung zwischen einer Sendeeinheit (20) und einer Empfangseinheit (20), wobei eine Anordnung (1) nach einem der Ansprüche 1 bis 9 verwendet wird, die
• eine der Sendeeinheit zugeordnete Primärspule (7), und
• eine der Empfangseinheit zugeordnete Sekundärspule (3), und
• eine erste Signalverarbeitungseinheit (4), und
• einen Kühlkörper
umfasst,
wobei die erste Signalverarbeitungseinheit (4) eingerichtet ist, die von der Sekundärspule (3) empfangene Energie zu verarbeiten, und
wobei die Anordnung (1) eingerichtet ist,
• die Sekundärspule (3) und einen Rohrrahmenabschnitt (6) des Fahrzeugs (2) koaxial zueinander anzuordnen und dabei gut wärmeleitend miteinander zu koppeln, und
• die gegenseitige magnetische Kopplung zwischen der Primärspule (7) und der Sekundärspule (3) durch Variation ihres Abstandes voneinander entlang des Rohrrahmenabschnittes (6) zu justieren, wobei zur Wärmekopplung ein Kühlkörper aus Metallschaum (26) vorgesehen ist, in den Temperatursensoren (12) und/oder Hall-Sensoren (8) eingebettet sind,
wobei die Energieübertragung zwischen Sendeeinheit (20) und Empfangseinheit (30) in Abhängigkeit der Signale der Temperatursensoren (12) und/oder Hall-Sensoren (8) geregelt wird.
